# EUROPÄISCHE PATENTSCHRIFT

(11) **EP 0 779 143 B1**
(45) Veröffentlichungstag und Bekanntmachung des Hinweises auf die Patenterteilung: **07.03.2001**
(21) Anmeldenummer: 96810801.9
(22) Anmeldetag: 15.11.1996
(51) Int. Cl.: B29C 51/14, B29C 51/08, B29C 51/04

(54) **Verfahren zum Herstellen von Blisterverpackungen**
Method for making blister packages
Procédé pour la fabrication d'emballages pelliculés

(30) Priorität: 12.12.1995 CH 350295; 24.04.1996 CH 104096
(43) Veröffentlichungstag der Anmeldung: 18.06.1997
(73) Patentinhaber: Alusuisse Technology & Management AG, 8212 Neuhausen am Rheinfall (CH)
(72) Erfinder: Zeiter, Patrik, 8180 Bülach (CH); Oster, Heinz, 8245 Feuerthalen (CH)

(56) Entgegenhaltungen:
- EP-A- 0 455 584
- EP-A- 0 563 934
- DE-A- 2 321 980
- US-A- 4 563 325

## Beschreibung

Vorliegende Erfindung betrifft eine Verfahren zum Herstellen von kaltverformten Formpackungen aus einem Metall-Kunststoff-Verbund, wobei der Verbund zwischen einem Niederhalter und einer Matrize festgehalten wird und die Matrize wenigstens eine Gesenköffnung aufweist und in die Gesenköffnungen der Matrize Stempel mit einer verformungswirksamen Oberfläche definierter Reibung vorgetrieben werden und dabei der Verbund zu der Formpackung mit einer oder mehreren Vertiefungen verformt wird. Ferner betrifft vorliegende Erfindung auch eine Vorrichtung zur Ausführung des Verfahrens von kaltverformten Formpackungen aus einem Metall-Kunststoff-Verbund.

Es ist bekannt, Formpackungen, wie z.B. die Bodenteile von Blisterpackungen, auch Durchdrückpackungen genannt, oder andere Verpackungsbehälter, beispielsweise durch Tiefziehen, Streckziehen oder Thermoformen herzustellen. Die Formpackungen können aus thermoplastischen Kunststoffen oder aus Folienverbunden oder Laminaten, wie z.B. Aluminiumfolien mit auflaminierten Kunststoff-Folien oder aufextrudierten Schichten aus thermoplastischen Kunststoffen hergestellt werden.

Werden die Formpackungen aus metallfolienhaltigen Laminaten gefertigt, kann dies mit Umformwerkzeugen aus einem Stempel, einer Matrize und einem Niederhalter erfolgen. Während der Umformung ist das Laminat zwischen der Matrize und dem Niederhalter klemmend festgelegt und anschliessend wird der Stempel gegen das Laminat bewegt. Der Stempel greift mit zunehmender Absenkung in die Gesenköffnungen der Matrize und verformt dabei das Laminat. Aus dem planen Laminat wird ein Formteil mit einer oder einer Mehrzahl von Vertiefungen geformt. Die Vertiefungen sind von Schultern umgeben und die Schultern entsprechen dem Laminat in der ursprünglichen Planlage. Für die Verformung zu einer Formpackung kann nur der Teil des Laminates, der im Bereich der Gesenköffnung liegt, fliessen oder gedehnt werden. Damit das Laminat, und dabei besonders das metallfolienhaltige Laminat, ohne Risse und Poren umgeformt werden kann, muss ein genügend grosser seitlicher Abstand zwischen Stempel und Gesenköffnung eingehalten werden. Mit diesem Verfahren erzielt man bei einer Kaltverformung eines metallfolienhaltigen Laminates nur eine geringe Steigung der Seitenwandungen der Vertiefungen. Dies führt zu schlechten Tiefungsverhältnissen, d.h. zu Vertiefungen geringer Höhe bei grossem Durchmesser, und somit zu grossen Packungen im Verhältnis zum Füllgut.

Eine Möglichkeit, mehr verformbares Laminat zur Verfügung zu haben, um stärkere Seitenwandsteigungen zu erzielen, kann darin liegen, die Niederhalterkraft zu verkleinern und nach der Tiefzieh-Technologie zu arbeiten. Diese Technologie ist für metallfolienhaltige Laminate, beispielsweise bei Blisterpackungen, nicht anwendbar, da im Randbereich oder auch im Schulterbereich Falten entstehen würden. Der Randbereich und gegebenfalls der Schulterbereich von Formpackungen wird jedoch in der Regel zum Aufsiegeln eines Deckels herangezogen. Mit Falten würde der Rand und die Schultern des Formteils unsiegelbar.

Aus der DE-OS 2 321 980 ist eine Vorrichtung zum Formen von Kunststoffverbunden bekannt. Der Formenstempel weist an der formgebenden Oberfläche einen reibungsarmen Stoff auf. Es soll damit eine gleichmässige Verstreckung des Kunststoffverbundes erreicht werden.

Aufgabe vorliegender Erfindung ist es, ein Verfahren zu beschreiben, welches die Erzeugung von Formpackungen, resp. Formteilen, aus metallfolienhaltigen Verbunden durch Kaltverformen ermöglicht und die Formpackungen faltenfrei sind und die Vertiefungen eine grosse Seitenwandsteigung aufweisen.

Erfindungsgemäss wird dies dadurch erreicht, dass die Matrize und der Niederhalter einen einander gegenüberliegenden Randbereich aufweisen und die Matrize innerhalb des Randbereiches einen Schulterbereich, welcher die Gesenköffnung oder die Gesenköffnungen umgibt, aufweist und die Oberfläche des Schulterbereiches 0,01 bis 10 mm tiefer liegt als die Oberfläche des Randbereiches der Matrize und ein erster Stempel oder erste Stempel mit einer verformungswirksamen Oberfläche hoher Reibung den Metall-Kunststoff-Verbund in einem oder mehreren Schritten bis zu 100% der endgültigen Tiefe der Vertiefungen vorverformen und anschliessend mit einem zweiten Stempel oder zweiten Stempeln mit einer verformungswirksamen Oberfläche niedriger Reibung in einem oder mehreren Schritten der vorverformte Metall-Kunststoff-Verbund bis zu wenigstens 100 % der endgültigen Tiefe der Vertiefungen verformt wird.

In vorliegendem Verfahren werden vorteilhaft die verschiedenen Stempel nacheinander eingesetzt und schrittweise wird über eine Vorverformung bis zur maximalen Verformungstiefe jeder Stempel gleich bis tiefer als der vorhergegangene Stempel in die Gesenköffnung abgesenkt. Da eine Rückfederung des Metall-Kunststoff-Verbundes zu beobachten ist, muss wenigstens der letzte Verformungsschritt vorteilhaft über 100% der angestrebten Verformungstiefe hinaus geführt werden.

In einem zweckmässigen Verfahren wird der Stempel in einem ersten Schritt oder Schritten bis 90%, besonders zweckmässig bis 70% und vorteilhaft bis 50% der endgültigen Tiefe der Vertiefungen vorgetrieben und anschliessend in einem zweiten Schritt oder Schritten von 100% bis 115% und vorteilhaft von 103% bis 110%, der endgültigen Tiefe der Vertiefungen vorgetrieben.

Zweckmässig weisen die bei dem ersten Schritt oder Schritten angewendeten Stempel resp. Stempelkörper, mit einer verformungswirksamen Oberfläche hoher Reibung, eine zylindrische Form, Kegelstumpfform, Pyramidenstumpfform oder eine Tonnenform auf. Die beim zweiten Schritt oder Schritten angewendeten Stempel weisen eine Kegelform, eine Pyramidenform, eine Kegelstumpfform, eine Pyramidenstumpfform, eine Kugelsegmentform oder Kalottenform auf. Die Stempel für den ersten Schritt weisen insbesondere senkrechte oder steile Seitenwände auf und die Kante oder der Rand zum Stempelboden hat einen kleinen Radius. Die Stempel für den zweiten Schritt, mit einer verformungswirksamen Oberfläche niedriger Reibung, kann senkrechte oder weniger steile und insbesondere abgeschrägte Seitenwände aufweisen und der Übergang zum Stempelboden kann gerundet sein oder eine rundliche Form aufweisen. Damit wird erreicht, dass der Metall-Kunststoff-Verbund im ersten Schritt oder Schritten nur schlecht über die Kante oder Rand den Rand zwischen Stempelseitenwand und -boden gleiten kann und damit zuerst der Metall-Kunststoff-Verbund aus den anderen Bereichen verformt wird und im zweiten Schrittt oder Schritten der Metall-Kunststoff-Verbund auch aus dem Bereich des Stempelbodens aufgrund der niedrigen Reibung und der gerundeten Formen des Stempels verformt wird.

In weiterer zweckmässiger Ausführungsform weist der Stempel mit einer verformungswirksamen Oberfläche hoher Reibung zwischen Verbund und Stempeloberfläche eine höhere Reibung auf, als der Stempel mit einer verformungswirksamen Oberfläche niedriger Reibung.

Das erfindungsgemässe Verfahren kann beispielsweise mit einer Matrize und Niederhalter und zwei oder mehreren Stempeln, die nacheinander in die Gesenköffnungen einer Matrize abgesenkt und wieder angehoben werden, ausgeführt werden. Die Stempel, resp. die Stempelkörper, weisen an ihren verformungswirksamen Oberflächen eine unterschiedliche Reibung auf. Für eine Vorverformung wird ein erster Stempel mit einer verformungswirksamen Oberfläche hoher Reibung eingesetzt, dann wird dieser Stempel zurückgezogen und ein zweiter Stempel mit einer verformungswirksamen Oberfläche niedriger Reibung führt in der gleichen Matrize die Endverformung durch. Entsprechend können auch drei und mehr Stempel mit einer verformungswirksamen Oberfläche mit zwei verschiedenen Reibungen oder graduell gestuft abnehmender Reibung eingesetzt werden.

Das Verfahren kann bevorzugt derart ausgeführt werden, dass die Stempel koaxial oder teleskopisch ineinander angeordnet sind. Ein erster Stempel, insbesondere mit einer verformungswirksamen Oberfläche niedriger Reibung, in der Draufsicht in Ringform, kann durch absenken in die Matrize eine Vorverformung des Verbundmaterials bewirken. Der erste Stempel kann in seiner Vorverformungsposition belassen werden und ein zweiter zylinderförmiger Stempel, der teleskopisch im ersten ringförmigen Stempel gleitet und eine verformungswirksame Oberfläche hoher Reibung aufweist, wird anschliessend abgesenkt und bewirkt die Endverformung des Verbundmaterials. Derartige Stempel können auch aus zwei oder mehreren ringförmigen und einem innersten zylinderischen Stempel, die teleskopisch ineinander gleiten, gebildet werden. Die Reibung der verformungswirksamen Oberflächen kann graduell von hoher Reibung des äussersten Stempels zu niedriger Reibung des innersten Stempels und zweckmässig wenigstens zweistufig, abnehmen.

Das Verfahren kann bevorzugt auch derart ausgeführt werden, dass mehrere, insbesondere zwei Matrizen mit ihren Niederhaltern nacheinander angeordnet sind und jede der Matrizen einen Stempel zugeordnet hat. Entsprechend bei zwei nacheinander folgenden Matrizen und zwei zugehörigen Stempeln kann die verformungswirksame Oberfläche des ersten Stempels eine hohe Reibung und des zweiten Stempels eine niedrige Reibung aufweisen. Taktweise wird das Verbundmaterial in einer ersten Stufe in der ersten Matrize vorverformt und in einer zweiten Stufe in der zweiten Matrize endverformt. Es ist auch möglich, die Vorverformung in zwei oder mehrere Stufen und die Endverformung in zwei oder mehrere Stufen aufzuteilen und somit ein insgesamt drei-, vier- usw. stufiges Verfahren anzuwenden, wobei die Reibung in zwei Stufen oder über die einzelnen Stufen graduell erniedrigt werden kann.

Die aus der Fläche des Verbundes geformten Vertiefungen können napfartig, schalenartig, kalottenförmig, tonnenförmig, zylindrisch usw. sein. In der Draufsicht können die Vertiefungen rund, oval oder polygonal, wie zwei-, drei-, vier- oder mehreckig, sein. Bevorzugt sind Vertiefungen mit steilen bis senkrechten, möglichst geraden Seitenwänden und möglichst wenig gewölbtem Boden. Die Vertiefungen sind von einer, in der Regel ebenen, Schulterfläche aus dem Verbund umgeben.

In bevorzugter Ausführungsform der Matrize, liegt die Oberfläche des Schulterbereiches der Matrize 0,1 bis 2 mm, vorzugsweise 0,15 bis 0,3 mm, tiefer als die Oberfläche des Randbereiches der Matrize.

Die Vorrichtung nach vorliegender Erfindung kann eine Matrize mit einer Gesenköffnung oder mit mehreren Gesenköffnungen enthalten.

Zweckmässig weist die Vorrichtung, und dabei insbesondere die Matrize, 1 bis 200, vorzugsweise 8 bis 40 Gesenköffnungen auf. Die Verformung des Metall-Kunststoff-Verbundes erfolgt mittels eines Stempels. Der Stempel kann als solcher in eine Gesenköffnung dringen. Weist die Matrize mehrere Gesenköffnungen auf, kann der Stempel einen Träger oder Tragplatte oder Halterplatte oder dergl. aufweisen und daran befestigt eine den Gesenköffnungen entsprechende Anzahl Stempelkörper. Der Stempel resp. die Stempelkörper sind derart dimensioniert, dass sie unter Verformung des Metall-Kunststoff-Verbundes in die Gesenköffnungen eindringen können. Vorteilhaft ist der Durchmesser des Stempels, resp. der Stempelkörper, 3 bis 35 %, vorzugsweise 1 bis 15 % und insbesondere 5 bis 10 %, geringer als der Durchmesser der jeweiligen Gesenköffnung. Unter Durchmesser des Stempels resp. Stempelkörpers oder der Gesenköffnung wird im Falle eines nicht kreisrunden Querschnittes, wie eines konvexen Querschnittes, z.B. elliptisch, oval, polygonal, rechteckig, trapezförmig, rhomboid usw., der kleinste Durchmesser verstanden.

Die Wände der Gesenköffnungen in der Matrize stehen in der Regel in einem Winkel von 90° zur Oberfläche des Schulterbereiches. Die Kante zwischen der Wand der Gesenköffnung und der Oberfläche des Schulterbereiches kann gerundet sein, mit einem Radius von beispielsweise 0,1 bis 10 mm und zweckmässig von 0,1 bis 1 mm.

In anderer bevorzugter Ausführungsform weisen die Randbereiche des Niederhalters und der Matrize eine Breite jeweils von 1 bis 100 mm, zweckmässig 2 bis 30 und vorzugsweise von 3 bis 20 mm auf.

Die Matrize weist den Randbereich und innerhalb des Randbereiches den Schulterbereich auf. Die Gesenköffnungen sind innerhalb des Schulterbereiches insbesondere symmetrisch oder auch unsymmetrisch angeordnet und der Schulterbereich bildet demnach Stege aus, welche die Gesenköffnungen umgeben.

Der Schulterbereich der Matrize weist beispielsweise Abstände zwischen dem Randbereich der Matrize und den Gesenköffnungen und zwischen den einzelnen Gesenköffnungen von 1 bis 50 mm und vorzugsweise 5 bis 25 mm, auf.

Der Randbereich des Niederhalters oder der Randbereich der Matrize oder die Randbereiche des Niederhalters und der Matrize können teil- oder vollflächig ein Rauhigkeitsmuster aufweisen. Typische Rauhigkeitsmuster sind Riffelungen, Waffelmuster, Warzenmuster, Wabenmuster, Noppen, Verzahnungen, aufgerauhte Oberflächen usw. Anstelle oder zusammen mit dem Rauhigkeitsmuster können auch umlaufende Leisten, beispielsweise aus einem elastischen Material, wie Gummi und dergl., eingesetzt werden.

Vorteilhaft liegen in Arbeitsstellung die Randbereiche des Niederhalters und der Matrize über den Metall-Kunststoff-Verbund einander an und halten, gegebenenfalls verstärkt durch ein Rauhigkeitsmuster, den Verbund unverstreckbar fest. Der Schulterbereich der Matrize liegt zweckmässig in Abstand zu den gegenüberliegenden Niederhalterteilen und in diesem Bereich ist der Metall-Kunststoff-Verbund nicht in Berührung mit dem Niederhalter und der Metall-Kunststoff-Verbund kann sich nach Massgabe der Absenkung des Stempels verstrecken oder fliessen.

Die Schulterbereiche der Matrize können ganz oder teilweise mit einer zumindest an der Oberfläche angeordneten Schicht niedriger Reibung bedeckt sein. Mit niedriger Reibung wird in vorliegendem Falle eine Reibung nach der Vorschrift BS 2782 Method 311 A mit Werten von beispielsweise 0,2 bis 2,1 (dimensionslose Zahl) umfasst. Die Schicht niedriger Reibung kann beispielsweise Kunststoffe, wie Polytetrafluorethylen, Polyoxymethylen (Polyacetal, POM), Polyethylen oder Polyethylenterephthalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphit-, bornitrid- oder molybdändisulfidhaltige Schichten sind anwendbar. Die Schicht mit niedriger Reibung auf den Schulterbereichen der Matrize ist bezüglich ihrer Dicke unkritisch, da nur die Oberfläche wirksam ist. In der industriellen Anwendung ist die Schicht grossen Reibbeanspruchungen ausgesetzt und eine Schichtdicke, welchen einen Abtrag oder Verschleiss zulässt, ist vorzuziehen. Daher kann die Dicke der Schicht bei der Anwendung der genannten Kunststoffe beispielsweise von 0,5 bis 20 mm betragen. Die Schicht aus Kunststoff kann beispielsweise als vorgeformte Einlage in den abgetieften Schulterbereich der Matrize eingelegt werden oder kann durch sprühen, streichen oder rakeln oder durch ein anderes Auftragsverfahren aufgebracht werden. Die Kunststoffe können auch in einer Matrix aus anderen Stoffen, wie Keramik oder Metall aufgenommen sein. Metallschichten können beispielsweise auf der Matrize mit chemischen oder physikalischen Verfahren aufgebracht werden, wie durch galvanische oder elektrolytische Abscheidung, plattieren oder aufdampfen aus dem Vakuum, oder die Matrize kann aus den entsprechenden Metallen zumindest teilweise bestehen.

Stempel mit einer verformungswirksamen Oberfläche hoher Reibung und Stempel mit einer verformungswirksamen Oberfläche niedriger Reibung sind in der Regel aus einer Haltevorrichtung, wie einer Halterplatte, und einer Anzahl Stempelkörper aufgebaut. Die Anzahl der Stempelkörper entspricht vorteilhaft der Anzahl der Gesenköffnungen. Die Stempelkörper greifen in die entsprechenden Oeffnungen im Niederhalter und in die Gesenköffnungen der Matrize.

Beim Stempel mit einer verformungswirksamen Oberfläche hoher Reibung weist zweckmässig wenigstens die verformungswirksame Oberfläche, d.h. die Oberfläche des Stempels, resp. der Stempelkörper, die mit dem Verbund in Berührung kommt, eine hohe Reibung auf. Mit hoher Reibung wird in vorliegendem Falle eine Reibung nach der Vorschrift BS 2782 Method 311 A mit Werten von beispielsweise 1,0 bis 3,0 (dimensionslose Zahl) umfasst. Die Oberfläche hoher Reibung kann beispielsweise Metalle, wie Stahl, oder Kunststoffe, wie Polyacetal (POM), Polyethylen, Gummi, Hartgummi oder Kautschuke, einschliesslich Acrylpolymerisaten, enthalten oder aus diesen Stoffen bestehen. An Oberflächen von Metallen können durch behandeln, wie aufrauhen, die Eigenschaften für eine hohe Reibung verliehen werden.

Beim Stempel mit einer verformungswirksamen Oberfläche niedriger Reibung weist zweckmässig wenigstens die verformungswirksame Oberfläche, d.h. die Oberfläche des Stempels, resp. der Stempelkörper, die mit dem Verbund in Berührung kommt, eine niedrige Reibung auf. Mit niedriger Reibung wird in vorliegendem Falle eine Reibung nach der Vorschrift BS 2782 Method 311 A mit Werten von beispielsweise 0,3 oder darunter bis 2,1 (dimensionslose Zahl) umfasst. Die Schicht niedriger Reibung kann beispielsweise Metalle, wie Stahl, oder Kunststoffe, wie Polytetrafluorethylen, Polyoxymethylen (Polyacetal, POM), Polyethylen oder Polyethylenterephthalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphitbornitrid- oder molybdändisulfidhaltige Schichten sind anwendbar.

Bei der Anwendung des Verfahrens nach vorliegender Erfindung weist vorteilhaft der oder die Stempel hoher Reibung einen Zahlenwert oder Zahlenwerte für die Reibung auf, der über dem Zahlenwert oder den Zahlenwerten des Stempels niedriger Reibung liegt.

Als Metall-Kunststoff-Verbunde können beispielsweise Verbunde, enthaltend eine Metallfolie in einer Dicke von 8 µm bis 150 µm und bevorzugt 20 bis 80 µm, angewendet werden. Die Folie kann aus z.B. Stahl, Eisen, Kupfer und bevorzugt aus Aluminium sein. Mitumfasst sind auch Metallfolien aus Legierungen, enthaltend im überwiegendem Masse eines der genannten Metalle. Bevorzugte Folien aus Aluminium können beispielsweise aus Aluminium einer Reinheit von wenigstens 98,0 %, zweckmässig 98,3 %, vorteilhaft 98,5 und insbesondere 98,6 % sein, wobei der Rest auf 100 % die begleitenden Verunreinigungen darstellen. Im weiteren können beispielsweise Aluminiumfolien des Types Al FeSi oder des Types AlFeSiMn angewendet werden.

Als Kunststoffe können beispielswiese Schichten, Folien oder Folienverbunde, wobei die Folien und Folienverbunde auch axial oder biaxial verstreckt sein können, aus thermoplastischen Kunststoffen der Reihen der Polyolefine, der Polyamide, der Polyester, des Polyvinylchlorids und weiterer angewendet werden.

Typische Beispiele von thermoplastischen Kunststoffen sind aus der Reihe der Polyolefine sind Polyethylene, wie MDPE, HDPE, uni- und biaxial verstreckte Polyethylene, Polypropylene, wie cast-Polypropylen und uni- oder biaxial verstreckte Polypropylene, oder aus der Reihe der Polyester das PolyethylenterephthalaL

Die Schichtdicke der thermoplastischen Kunststoffe als Schicht, Folie oder Folienverbund in den Metall-Kunststoff-Verbunden kann beispielsweise 12 bis 100 µm und bevorzugt 20 bis 60 µm betragen.

Die Metallfolien und thermoplastischen Kunststoffe können z.B. durch Kaschieren, Kalandrieren oder Extrusionskaschieren zu Verbunden gefügt werden. Zu Verbinden der Schichten können fallweise Kaschierkleber und Haftvermittler angewendet werden und die zu verbindenden Oberflächen können durch Plasma-, Korona- oder Flammvorbehandlung modifiziert werden.

Beispiele von Metall-Kunststoff-Verbunden sind Verbunde mit einer ersten Schicht, beispielsweise einer Folie oder einem Folienverbund aus den genannten thermoplastischen Kunststoffen, einer zweiten Schicht, in Form einer Metallfolie und einer auf der freien Seite der Metallfolie angebrachten dritten Schicht, einer Siegelschicht aus einem Polyolefin, wie Polyethylen oder Polypropylen oder aus PVC.

Weitere anwendbare Metall-Kunststoff-Verbunde können eine erste Schicht, beispielsweise eine Folie oder einen Folienverbund aus den genannten thermoplastischen Kunststoffen, einer zweiten Schicht in Form einer Metallfolie und einer dritten Schicht, beispielsweise einer Folie oder Folienverbund oder eine extrudierte Schicht, aus den genannten thermoplastischen Kunststoffen aufweisen. Weitere Schichten, wie Siegelschichten können vorgesehen werden.

Die Metall-Kunststoff-Verbunde können auf wenigstens einer seiner Aussenseiten oder auf beiden Aussenseiten eine Siegelschicht, in Form einer siegelbaren Folie oder eines Siegellackes aufweisen. Die Siegelschicht ist bestimmungsgemäss in äusserster Lage innerhalb des Verbundaufbaues angeordnet Insbesondere kann eine Siegelschicht auf einer Aussenseite des Verbundes vorgesehen sein, wobei diese Siegelschicht bei der Formpackung gegen die Inhalts- resp. Schulterseite gerichtet sein soll, um das Ansiegeln einer Deckelfolie oder dergl. zu ermöglichen.

Typische Beispiele aus der Praxis von Metall-Kunststoff-Verbunden für vorliegendes Herstellungsverfahren der Kattverformten Formpackungen sind:
oPA25/Al 45/PVC 60,
oPA 25 / Al 45 / oPA 25,
Al 120 / PP 50,
oPA 25/ Al 60/ PE 50,
oPA 25 / Al 60 / PP 60,
oPA 25/ Al 45 / PVC 100,
oPA 25/ Al 60/ PVC 60,
oPA 25 / Al 45 / PE-beschichtet,
oPA 25 / Al 45/ cPA 25,
oPA 25 / Al 60 / PVC 100 und
oPA 25 / Al 60 oPA 25/ EAA 50,
wobei oPA für orientiertes Polyamid, cPA für gegossenes (cast) Polyamid, PVC für Polyvinylchlorid, PE für Polyethylen, PP für Polypropylen, EAA für Ethylenacrylsäure und Al für Aluminium steht und die Ziffern für die Schicht-, resp. Foliendicke in µm stehen.

Vorliegende Erfindung berifft auch die Vorrichtung zur Durchführung des erfindungsgemässen Verfahrens, wobei die Matrizen und die Niederhalter einander gegenüberliegende Randbereiche aufweisen, die den Verbund klemmend und unverstreckbar zwischen dem Matrizenrand und dem Niederhalterrand festgelegen und Stempeln, die den Verbund über die Schultern der Matrize in Gesenköffnungen, die sich innerhalb eines Schulterbereiches in der Matrize befinden, ziehen, wobei die Oberfläche des Schulterbereiches gegenüber dem Randbereich der Matrize 0,01 bis 10 mm tiefer liegt und der Verbund über die Oberfläche des Schulterbereiches gleitend oder fliessend gezogen und/oder gestreckt wird.

Zweckmässig ist eine Vorrichtung zur Durchführung des Verfahrens, bei welcher die Oberfläche des Schulterbereiches der Matrize 0,1 bis 2,0 mm, vorzugsweise 0,15 bis 0,3 mm, tiefer liegt als die Oberfläche des Randbereiches der Matrize.

Bevorzugt ist eine Vorrichtung zur Durchführung des Verfahrens, bei welcher die Schulterbereiche der Matrize ganz oder teilweise mit einer Oberflächenschicht niedriger Reibung, vorzugsweise einer Reibung von 0,3 bis 2,1, bedeckt sind.

Bevorzugt ist auch eine Vorrichtung zur Durchführung des Verfahrens mit wenigstens einem Stempel mit einem verformungswirksamen Oberfläche mit hoher Reibung und mit wenigstens einem Stempel mit einer verformungswirksamen Oberfläche niedriger Reibung.

Weiters bevorzugt ist eine Vorrichtung zur Durchführung des Verfahrens, wobei die verformungswirksame Oberfläche des Stempels mit hoher Reibung aus Stahl, Polyacetal (POM), Gummi, Kautschuk oder Acrylkautschuk ist.

Auch bevorzugt ist eine Vorrichtung zur Durchführung des Verfahrens, wobei die verformungswirksame Oberfläche des Stempels mit niedriger Reibung aus Stahl, Polytetrafluorethylen, Polyoxymethylen, Polyethylen oder Polyethylenterephthalat ist.

Vorliegende Erfindung umfasst auch kaltverformte Formpackungen, hergestellt nach dem erfindungsgemässen Verfahren, wobei die Formpackungen aus einem Metall-Kunststoff-Verbund sind.

Im Rahmen vorliegender Erfindung ist die Verwendung der erfindungsgemässen kaltverformten Formpackung als Behältnis zur vereinzelten Aufnahme von stückförmigen Füllgütern in den Vertiefungen. Beispiele sind die Aufnahme von z.B. einem, zwei oder drei Tabletten, Dragees, Pillen, Ampullen etc. in jeder Vertiefung einer Formpackung, wie einer Blister- oder Durchdrückpackung.

Das erfindungsgemässe Verfahren kann demnach zur Herstellung von kaltverformten Formpackungen, wie Blisterpackungen für Pharmazeutika, Nahrungs- und Genussmittel, technische Artikel, für Boden- und Deckelteile von halbstarren und starren Verpackungen, für Umhüllungen usw. aus einem Metall-Kunststoff-Verbund verwendet werden.

Beim Thermoformen von Kunststoff-Filmen, wie z.B. PVC, zu Blisterpackungen, werden hohe Seitenwandsteigungen erzielt. Solche Seitenwandsteigungen an den Vertiefungen von Formpackungen, wie Blisterpackungen, aus metallfolienhaltigen Laminaten konnten bis anhin nicht erzielt werden. Die bedeutete, dass im Verhältnis zum Füllgut viel zu grosse Packungen eingesetzt werden mussten. Mit vorliegendem Verfahren werden Formpackungen erreicht, welche die bisherigen Nachteile, wie die gegenüber den thermogeformten Kunststoffblistern geringe Seitenwandsteigung, nicht aufweisen. Es gelingt nach vorliegendem Verfahren Formpackungen herzustellen, die bezüglich der Packungsgrösse mit z.B. Kunststoffblistern zumindest vergleichbar, wenn nicht besser ist. Damit kann die Verpackung attraktiver gestaltet und da ökologische Profil verbessert werden. Zudem erfolgt die porenfreie Umformungtiefe verbessert werden.

Es können Tiefungsverhältnisse, d.h. ein Verhältnis von Durchmesser der Vertiefung zu Höhe der Vertiefung von beispielsweise 2 bis 3 erzeugt werden. Der Durchmesser der Vertiefung, soweit es sich nicht um einen runden Querschnitt handelt, wird im Falle eines nicht kreisrunden Querschnittes, wie eines konvexen Querschnittes, z.B. elliptisch, oval, polygonal, rechteckig, trapezförmig, rhomboid usw., der kleinste Durchmesser verstanden.

Der grösste Durchmesser der einzelnen Vertiefungen kann beispielsweise von 1 bis 500 mm, vorzugsweise 3 bis 30 mm, und die Höhe einer Vertiefung von 1 bis 100 mm, vorzugsweise 3 bis 30 mm, betragen.

Die Anzahl von Vertiefungen jeden Bodenteiles ist unkritisch und kann beispielsweise eine, zwei oder mehr Vertiefungen enthalten. In der Pharmazie sind beispielsweise Packungen mit 6 bis 40 Vertiefungn gängig.

Mit Kaltverformung wird in vorliegendem Fall eine Verformung bei Temperaturen von beispielsweise 10 bis 35 °C und vorzugsweise 20 bis 30 °C, umfasst.

Die zu Formpackungen, wie Blisterpackungen und insbesondere Bodenteilen von Blisterpackungen, verarbeiteten Verbunde bleiben porenfrei auch bei grossen Tiefungsverhältnissen und auch die Ausschussrate bei der Umformung vermindert sich erheblich.

Die Figuren 1 bis 9 erläutern die vorliegende Erfindung beispielhaft näher.

Die Figur 1 zeigt eine Vorrichtung zur Herstellung von kaltverformten Blisterpackungen nach dem Stand der Technik schematisch im Schnitt.

Die Figuren 2 und 3 zeigen eine erfindungsgemässe Vorrichtung in den nacheinanderfolgenden zwei Verfahrensstufen schematisch im SchnitL

Die Figur 4 stellt die Draufsicht auf eine Matrize für die Vorrichtung nach vorliegender Erfindung dar.

Die Figur 5 stellt die Draufsicht auf einen Niederhalter für die Vorrichtung nach vorliegender Erfindung dar.

Die Figur 6 zeigt schematisch einen Verfahrensablauf nach vorliegender Erfindung.

Die Figuren 7 und 8 zeigen eine Variante der erfindungsgemässen Vorrichtung in den nacheinanderfolgenden zwei Verfahrensstufen schematisch im Schnitt.

Figur 9 zeigt einen Schnitt durch einen Stempelkörper.

In Figur list eine Vorrichtung nach dem Stand der Technik, aus einer Matrize 1, einem Niederhalter 5 und einem Stempel 6. In vorliegendem Fall weist der Stempel einen Träger (nicht gezeigt) und daran befestigt eine Anzahl Stempelkörper 6 auf. Die Anzahl der Stempelkörper entspricht der Anzahl der Gesenköffnungen in der Matrize 1. Der Stempel, resp. die einzelnen Stempelkörper 6, durchdringen die Oeffnungen 7 im Niederhalter. Zwischen der Matrize 1 und dem Niederhalter 5 wird ein Metall-Kunststoff-Verbund 20 eingelegt. Durch Druckbeaufschlagung wird der Niederhalter 5 gegen die Matrize 1 gepresst, wobei der Metall-Kunststoff-Verbund 20 an allen Berührungsstellen zwischen Matrize 1 und Niederhalter 5 im wesentlichen unverstreckbar festliegt. Die Stempelkörper 6 senken sich unter Krafteinwirkung durch die Oeffnungen 7 im Niederhalter, stossen auf den Metall-Kunststoff-Verbund 20" und unter Verformung des Metall-Kunststoff-Verbundes 20' senken sich die Stempelkörper 6 durch die Gesenköffnungen 8 in der Matrize, bis der gewünschte Verformungsgrad des Metall-Kunststoff-Verbundes erreicht ist.

Der Metall-Kunststoff-Verbund wird sowohl im Randbereich als auch im Schulterbereich 13 zwischen Niederhalter 5 und Matrize 1 im wesentlichen unverstreckbar festgelegt und die Verformung des Verbundes erfolgt lediglich innerhalb des die Gesenköffnung 8 überdeckenden Metall-Kunststoff-Verbundes.

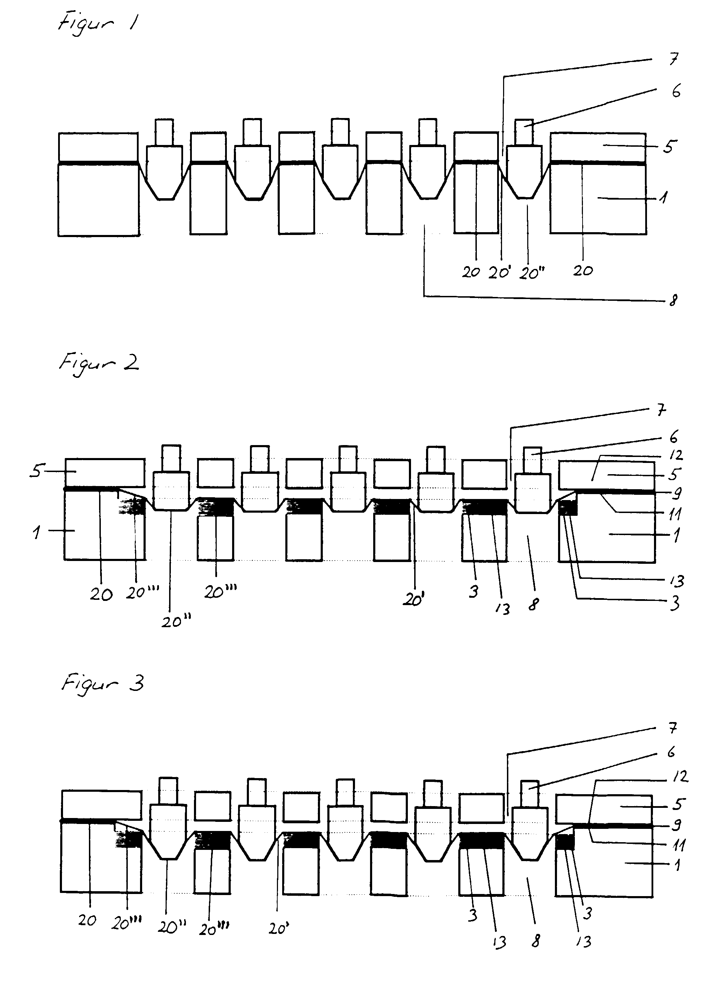

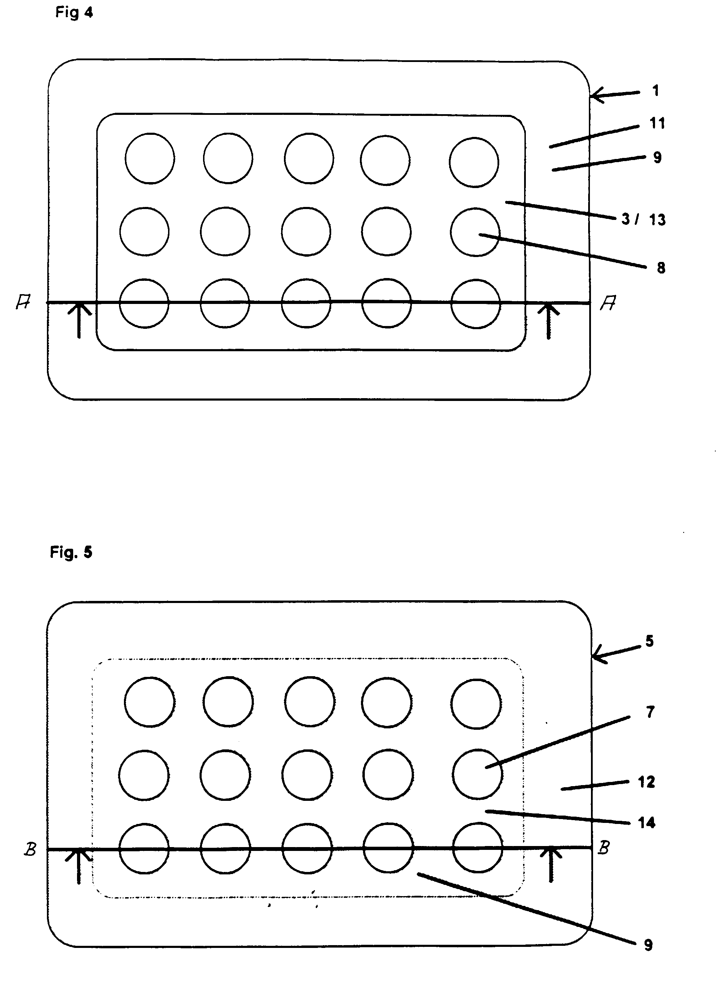

In Figuren 2 und 3 wird das erfindungsgemässe Verfahren in zweistufiger Ausführung gezeigt, wobei die Vorrichtung im Schnitt dargestellt ist. Es sind die Matrize 1, der Niederhalter 5 und der Stempel (Stempelkörper) 6. Der Niederhalter 5 weist einen Randbereich 12 auf. Auch die Matrize 1 weist einen Randbereich 11 auf. Im Randbereich 11 der Matrize 1 ist ein Rauhigkeitsmuster 9 angebracht. Bezogen auf die Höhe des Randbereiches 11 der Matrize 1, ist der ganze Schulterbereich 13, d.h. der Bereich der Matrize 1, der sich innerhalb des Randbereiches 11 befindet und der die Schultern bildet, welche die Gesenköffnungen umgeben, tiefer liegend angeordnet.

Im Schulterbereich 13 der Matrize 1 ist eine Schicht 3 angeordnet. Die Schicht 3 ist in Figuren 2 und 3 schraffiert eingezeichnet. Die Schicht 3 ist eine Schicht aus einem Werkstoff mit niedriger Reibung, aus beispielsweise Polytetrafluorethylen, Polyoxymethylen, Polyolefinen oder Polyethlyenterephthalat usw. Die Schicht 3 erstreckt sich vorteilhaft über den ganzen Schulterbereich 13 der Matrize 1. Eine Schicht 3 die nur Teile des Schulterbereiches 13 bedeckt ist fallweise möglich.

Das Vertiefen des Schulterbereiches 13 der Matrize 1 kann beispielsweise durch spanabhebende Bearbeitung, wie ausfräsen, schleifen oder durch Funkenerosion usw. erfolgen. Die Matrize 1 kann auch zweiteilig angeführt werden, wobei der Randbereich 11 und der Schulterbereich 13 gegeneinander beweglich sind und gegeneinander justiert und bei erreichen der gewünschten Höhendifferenz gegenseitig festgelegt werden können. Es kann sich bei der Matrize 1 auch um ein Gusstück handeln, welches die Vertiefung, die den Schulterbereich 13 ausbildet, bereits aufweist. Entsprechend ist es auch denkbar, dass der Niederhalter 5 nicht eine plane Oberfläche aufweist, die gegen die Matrize 1 gerichtet ist, sondern einen Randbereich 12 und einen gegenüber dem Randbereich 12 vertieften Schulterbereich aufweist.

In der erfindungsgemässen Vorrichtung wird ein Metall-Kunststoff-Verbund 20 verformt. Der Metall-Kunststoff-Verbund 20 kann als Endlosmaterial von einer Vorratsrolle oder als Bogen in die Vorrichtung eingeführt werden. Die Teilbereiche des Metall-Kunststoff-Verbundes 20, die unterschiedlichen Verformungsgradienten unterliegen, sind mit 20', 20" und 20"' bezeichnet Der Metall-Kunststoff-Verbund 20 wird zwischen dem Niederhalter 5 und der Matrize 1 und dabei insbesondere im Randbereich 11 der Matrize 1, der vom Randbereich 12 des Niederhalters überdeckt wird, klemmend und unverstreckbar festgelegt. Die Stempelkörper 6 senken sich unter Krafteinwirkung durch die Oeffnungen 7 im Niederhalter, stossen auf den Metall-Kunststoff-Verbund 20". Unter Verformung des Metall-Kunststoff-Verbundes senken sich die Stempelkörper 6 durch die Gesenköffnungen 8 in der Matrize, bis der gewünschte Verformungsgrad des Metall-Kunststoff-Verbundes erreicht ist. Der Metall-Kunststoff-Verbund 20"' kann im ganzen Schulterbereich 13, d.h. entlang den Randbereichen und den Schultern zwischen den Gesenköffnungen 8, im Masse der Absenkung des Stempels 6 in die Gesenköffnungen 8, fliessen und unter Verstreckung verformt werden. Zusätzlich wird der Metall-Kunststoff-Verbund 20' zwischen Schulterbereich und Stempelkörper 6 unter Verstreckung verformt. Die Stempelkörper weisen 6 weisen eine Oberfläche hoher Reibung auf und sind im Querschitt vorteilhaft zylinder- oder tonnenförmig gestaltet. D.h. der Rand oder die Kante zwischen Stempelboden und Stempelseitenwand weist einen kleinen Radius auf und die Stempelseitenwand steht in steilem Winkel oder senkrecht zum Stempelboden. Die Verformung wird z.B. bis zu 100% der endgültigen Tiefe der Vertiefung durchgeführt.

In Figur 3 ist der zweite Schritt des erfindungsgemässen Verfahrens dargestellt. Bezüglich der Matrize 1, Niederhalter 5, den Öffnungen 7 und 8, dem Rauigkeitsmuster 9, dem Randbereich 11, dem Randbereich 12 und dem Schulterbereich 13 besteht kein wesentlicher vorrichtungsbezogener Unterschied zur ersten Verahrensstufe. In der zweiten Verfahrensstufe werden unter weiterer Verformung des Metall-Kunststoff-Verbundes 20 andere Stempelkörper 6 in die Gesenköffnungen 8 der Matrize abgesenkt, bis der gewünschte Verformungsgrad des Metall-Kunststoff-Verbundes erreicht ist. Der Metall-Kunststoff-Verbund 20"' kann weiter im ganzen Schulterbereich 13, d.h. entlang den Randbereichen und den Schultern zwischen den Gesenköffnungen 8, im Masse der Absenkung der Stempelkörper 6 in die Gesenköffnungen 8, fliessen und unter Verstreckung verformt werden. Auch der Metall-Kunststoff-Verbund 20' zwischen Schulterbereich und Stempelkörper 6 wird unter weiterer Verstreckung verformt. Für den zweiten Verformungsschritt wird beispielhaft ein Stempel mit Stempelkörpern 6 mit einem kegelstumpf-förmigem Querschnitt angewendet. Die verformungswirksame Oberfläche der Stempelkörper 6 weist eine niedrige Reibung auf. Dadurch kann der Metall-Kunststoff-Verbund 20" auch im Bereich der verformungswirksamen Oberfläche der Stempelkörper 6 fliessen. Die Verformung wird z.B. bis zu mindestens 100% der endgültigen Tiefe der Vertiefung durchgeführt

Die Figur 4, eine Draufsicht auf eine Matrize 1, zeigt den Randbereich 11 und den Schulterbereich 13. Der Randbereich 11 kann ein Rauhigkeitsmuster 9 aufweisen. Der Schulterbereich 13 liegt gegenüber dem Randbereich 11 um 0,01 bis 10 mm tiefer. Der Schulterbereich 13, ist in vorteilhafter Ausführungsform teil- und insbesondere vollflächig mit dem beschriebenen Belag oder Schicht 3 niedriger Reibung abgedeckt. Im Schulterbereich 13 sind beispielhaft in regelmässiger Anordnung die Gesenköffnungen 8 eingezeichnet. Es handelt sich in der Regel um Bohrungen, d.h. Öffnungen oder Ausnehmungen runden Querschnittes oder aber auch um Öffnungen ovalen Querschnittes. Auch Öffnungen polygonalen Querschnittes, wie z.B. rechteckige, quadratische oder sechseckige Öffnungen, ohne weiteres zu verwirklichen.

In Figur 5 ist ein Niederhalter 5 in der Draufsicht abgebildet Die gegen die Matrize und den beim Herstellungsprozess dazwischen zu liegen kommenden Verbund gerichtete Oberfläche 14 des Niederhalters 5 kann plan sein. Über die Berührungsflächen, die sich durch den Randbereich 12 des Niederhalters 5 und den Randbereich 11 der Matrize 1 ausbilden, wird in Arbeitsstellung der Verbund in der Weise festgeklemmt, dass der Verbund nicht fliessen oder sich verstrecken kann. Der Niederhalter 5 kann anstelle der planen Oberfläche auch einen Randbereich 12 und einen innerhalb des Randbereiches liegenden vertieften Bereich aufweisen oder der Niederhalter kann im wesentlichen nur aus dem Randbereich bestehen, d.h. einen Ring darstellen.

Im Randbereich 12 des Niederhalters 5 kann ein teil- oder vollflächiges Rauhigkeitsmuster angeordnet sein. Anstatt oder in Kombination mit einem Rauhigkeitsmuster können am Niederhalter Leisten aus einem elastischen Material, wie Gummi etc., angeordnet sein, wobei diese Leisten die Klemmwirkung verstärken. Der Randbereich des Niederhalters 5 ist zweckmässig gegengleich zum Randbereich 11 der Matrize 1 angeordnet und beide Randbereiche 11, 12 haben im wesentlichen die gleichen Abmessungen.

Der Niederhalter 5 weist eine Mehrzahl von Öffnungen 7 oder Ausnehmungen, in vorliegendem Falle Bohrungen, auf. Die Bohrungen 7 werden vom Stempel, resp. von Stempelkörpern durchdrungen und entsprechend sind die Bohrungen in gleicher Lage und Anordnung und zumindest annähernd gleicher Grösse wie die Gesenköffnungen 8 in der Matrize 1.

Die Linien A-A in Figur 4 und B-B in Figur 5 deuten die Stelle des in den Figuren 2 und 3 gezeigten Querschnittes durch die Matrize 1 und Niederhalter 5 an.

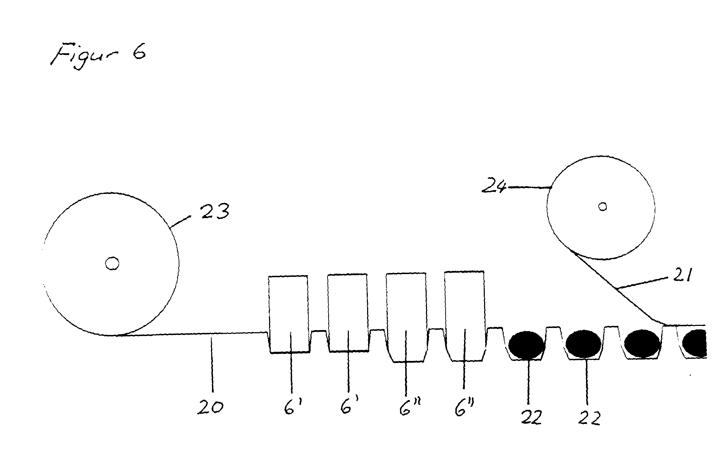

In Figur 6 ist das vorliegende Verfahren vereinfacht schematisch dargestellt. Ein Metall-Kunststoff-Verbund 20 wird von einer Rolle 23 abgerollt und einem ersten Stempel mit Stempelkörpern 6' und anschliessend einem zweiten Stempel mit Stempelkörpern 6" zugeführt. Dem Metall-Kunststoff-Verbund 20 werden dabei in zwei Stufen die Vertiefungen eingeformt und es entstehen die Formpackungen. Anschliessend werden die Formpackungen mit den Inhaltstoffen 22 befüllt. Danach kann kontinuierlich durch aufsiegeln oder dergl. eine Deckelfolie 21, die von einer Vorratsrolle 24 abgerollt wird, auf den Formpackungen angebracht werden. Die endlosen Formpackungen lassen sich dann zu den gewünschten Packungsgrösse ablängen.

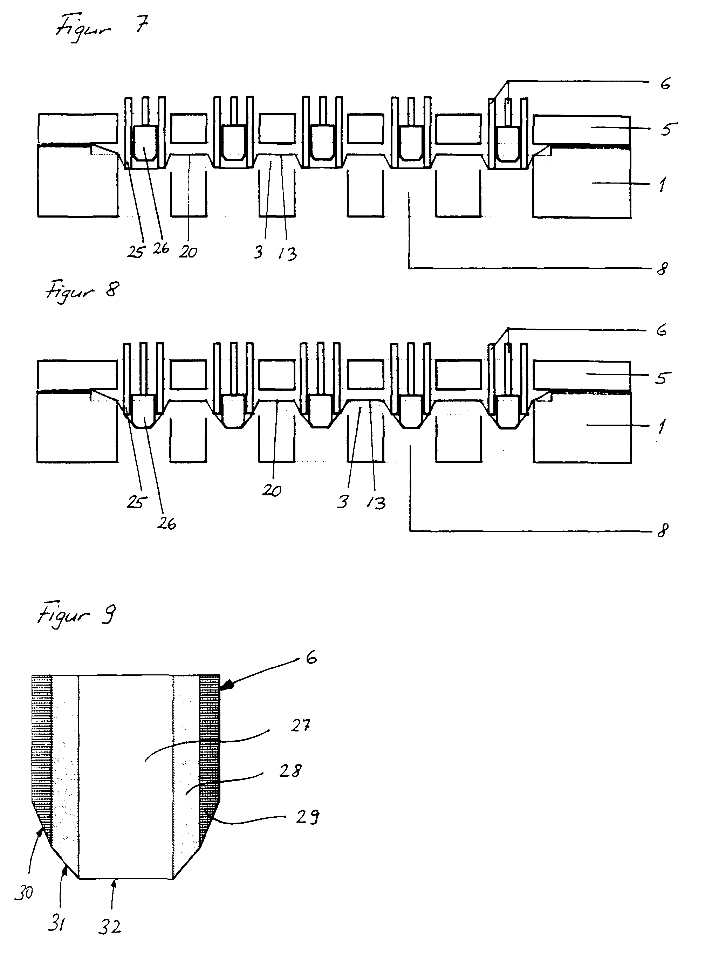

In Figuren 7 und 8 wird eine weitere Variante des erfindungsgemässen Verfahrens in zweistufiger Ausführung gezeigt, wobei die Vorrichtung im Schnitt dargestellt ist. Es sind die Matrize 1, der Niederhalter 5 und der Stempel 6. Weitere Einzelheiten und deren Bezeichnungen lassen sich entsprechend den Figuren 2 und 3 entnehmen. Im Schulterbereich 13 der Matrize 1 ist eine Schicht 3 angeordnet. Die Schicht 3 ist in Figuren 7 und 8 schraffiert eingezeichnet. Die Schicht 3 ist die Schicht aus einem Werkstoff mit niedriger Reibung, wie aus Figuren 2 und 3 bekannt. In der Figur 7 ist ein erster Verfahrensschritt gezeigt. Der Metall-Kunststoff-Verbund 20 wird durch die Stempel 6 verformt. Die Stempel 6 stellen eine bauliche Einheit dar und sind beispielhaft zweiteilig ausgeführt. Ein hohlzylinderförmiger Stempel 25, mit -- in der Draufsicht -- Ringform und einer verformungswirksamen Oberfläche hoher Reibung, wird abgesenkt und es erfolgt eine Vorverformung des Metall-Kunststoff-Verbundes 20. Gemäss Figur 8 erfolgt die Endverformung des Metall-Kunststoff-Verbundes 20 in einem zweiten Schritt. Als Teil des Stempels 6 gleitet teleskopisch im Stempel 25 ein zylindrischer Stempel 26. Der Stempel 25 hat gemäss Figur 7 seine Endposition erreicht und verbleibt in der abgesenkten Lage. Der Stempel 26 gleitet teleskopartig aus dem Stempel 25 heraus und wird über den Stempel 25 hinaus abgesenkt. Dabei verformt der Stempel 26 mit seiner verformungswirksamen Oberfläche niedriger Reibung den Metall-Kunststoff-Verbund 20 vorteilhaft bis über 100% der angestrebten Verformungstiefe.

Die Figur 9 zeigt einen einteiligen Stempel 6 der aus Materialien verschiedener Reibung 27, 28, 29 gefertigt ist. Entsprechend weist der Stempel 6 an der verformungswirksamen Oberfläche 30 eine höhere Reibung auf als an der verformungswirksamen Oberfläche 31. Die verformungswirksame Oberfläche 32 hat wiederum eine niederigere Reibung als die verformungswirksamen Oberfläche 31.

In vorliegend bildlich dargestellter Ausführungsform wird eine verhältnismässig kleine Matrize gezeigt. Es ist auch möglich Matrizen nach vorliegender Erfindung zu gestalten, deren Schulterbereich durch Quer- und /oder Längsstege unterteilt ist. Im Bereich dieser Stege wird der Metall-Kunststoff-Verbund vom Niederhalter klemmend festgehalten. Damit gelingt es beispielsweise mit einer Matrize und mit einem Stempelhub eine Mehrzahl von Formpackungen zu erzeugen. Nach der Verformung können die gleichzeitig gefertigten Formpackungen z.B. durch Trennschnitte entlang den Stegbereichen aufgeteilt werden.

## Patentansprüche

1. Verfahren zum Herstellen von kaltverformten Formpackungen, aus einem Metall-Kunststoff-Verbund (20), wobei der Verbund (20) zwischen einem Niederhalter (5) und einer Matrize (1) festgehalten wird und die Matrize (1) wenigstens eine Gesenköffnung (8) aufweist und in die Gesenköffnungen (8) der Matrize Stempel (6) mit einer verformungswirksamen Oberfläche definierter Reibung vorgetrieben werden, und dabei der Verbund zu der Formpackung mit einer oder mehreren Vertiefungen verformt wird,
dadurch gekennzeichnet, dass
die Matrize (1) und der Niederhalter (5) einen einander gegenüberliegenden Randbereich (11,12) aufweisen und die Matrize (1) innerhalb des Randbereiches (11) einen Schulterbereich (13), welcher die Gesenköffnung (8) oder die Gesenköffnungen (8) umgibt, aufweist und die Oberfläche des Schulterbereiches (13) um 0,01 bis 10 mm tiefer liegt als die Oberfläche des Randbereiches (11) der Matrize (1) und ein erster Stempel (6) oder erste Stempel (6), mit einer verformungswirksamen Oberfläche hoher Reibung, den Metall-Kunststoff-Verbund in einem oder mehreren Schritten bis zu 100 % der endgültigen Tiefe der Vertiefungen vorverformen und anschliessend, mit dem zweiten Stempel (6) oder Stempeln (6), mit einer verformungswirksamen Oberfläche niedriger Reibung, der vorverformte Metall-Kunststoff-Verbund in einem oder mehreren Schritten bis zu wenigstens 100 % der endgültigen Tiefe der Vertiefungen verformt wird.

2. Verfahren zur Herstellung von kaltverformten Formpackungen nach Anspruch 1, dadurch gekennzeichnet, dass der erste Stempel (6) oder erste Stempel (6) in einem ersten Schritt bis 90 %, zweckmässig bis zu 70 % und vorteilhaft bis zu 50 % der endgültigen Tiefe der Vertiefungen vorgetrieben werden und anschliessend in einem zweiten Schritt ein zweiter Stempel oder zweite Stempel auf 100 % bis 115 % und vorteilhaft auf 103 % bis 110 % der endgültigen Tiefe der Vertiefungen vorgetrieben.

3. Verfahren zur Herstellung von kaltverformten Formpackungen nach Anspruch 1, dadurch gekennzeichnet, dass der Stempel (6) mit einer verformungswirksamen Oberfläche hoher Reibung zwischen Verbund (20) und Stempeloberfläche eine höhere Reibung aufweist, als der Stempel (6) mit einer verformungswirksamen Oberfläche niedriger Reibung.

4. Verfahren zur Herstellung von kaltverformten Formpackungen nach Anspruch 1, dadurch gekennzeichnet, dass mittels einer Matrize (1) und einem Niederhalter (5) der Verbund (20) festgelegt wird und mittels zwei oder mehrerer ineinander teleskopisch gleitender Stempel (6), die nacheinander in die Gesenköffnungen (8) einer Matrize (1) abgesenkt werden, der Verbund (20) verformt wird.

5. Verfahren zur Herstellung von kaltverformten Formpackungen nach Anspruch 4, dadurch gekennzeichnet, dass ein erster Stempel (25) in Ringform und insbesondere mit einer verformungswirksamen Oberfläche hoher Reibung, abgesenkt wird und in der Matrize (1) eine Vorverformung des Verbundmaterials (20) bewirkt und der erste Stempel (25) in seiner Vorverformungsposition belassen wird und ein zweiter zylinderförmiger Stempel (26), der teleskopisch im ersten ringförmigen Stempel (25) gleitet und eine verformungswirksame Oberfläche niedriger Reibung aufweist, anschliessend abgesenkt wird und die Endverformung des Verbundmaterials (20) bewirkt.

6. Verfahren zur Herstellung von kaltverformten Formpackungen nach Anspruch 1, dadurch gekennzeichnet, dass mittels einer Matrize (1) und einem Niederhalter (5) der Verbund (20) festgelegt wird und zwei oder mehrere Stempeln (6), die nacheinander in die Gesenköffnungen (8) einer Matrize (1) abgesenkt und wieder angehoben werden, der Verbund (20) verformt wird.

7. Verfahren zur Herstellung von kaltverformten Formpackungen nach Anspruch 6, dadurch gekennzeichnet, dass die Stempel (6) oder die Stempelkörper (6) an ihren verformungswirksamen Oberflächen eine unterschiedliche Reibung aufweisen und ein erster Stempel (6) mit einer verformungswirksamen Oberfläche hoher Reibung eingesetzt wird und dieser Stempel (6) zurückgezogen wird und anschliessend ein zweiter Stempel (6) mit einer verformungswirksamen Oberfläche niedriger Reibung eingesetzt wird oder dass drei und mehr Stempel (6) mit einer verformungswirksamen Oberfläche mit zwei verschiedenen Reibungen oder mit graduell gestuft abnehmender Reibung eingesetzt werden.

8. Verfahren zur Herstellung von kaltverformten Formpackungen nach Anspruch 1, dadurch gekennzeichnet, dass mehrere Matrizen (1) mit ihren Niederhaltern (5) nacheinander angeordnet sind und jede der Matrizen (1) einen Stempel (6) zugeordnet hat und der Verbund (20) taktweise von Matrize (1) zu Matrize (1) verschoben wird und der Verbund (20) wenigstens in einer Matrize (1) vorverformt und der vorverformte Verbund (20) auf die nächstfolgende Matrize (1) verschoben und in der letzten Matrize (1) endverformt wird.

9. Verfahren zur Herstellung von kaltverformten Formpackungen nach Anspruch 8, dadurch gekennzeichnet, dass bei mehreren nacheinander folgenden Matrizen (1) bei den zugehörigen Stempeln (6) die verformungswirksame Oberfläche des ersten Stempels (6) eine hohe Reibung und die des letzten Stempels (6) eine niedrige Reibung aufweist und dass bei mehreren nacheinander folgenden Matrizen (1) bei den zugehörigen Stempeln (6) die Reibung der verformungswirksame Oberfläche in einer ersten Gruppe von Stempeln (6) eine hohe Reibung und einer zweiten Gruppe von Stempeln (6) eine niedrige Reibung aufweist oder die Reibung über die einzelnen Stempel (6) graduell abgesenkt wird.

10. Verfahren zur Herstellung von kaltverformten Formpackungen nach Anspruch 8, dadurch gekennzeichnet, dass zwei Matrizen (1) mit ihren Niederhaltern (5) nacheinander angeordnet sind und jede der Matrizen (1) einen Stempel (6) zugeordnet hat und der Verbund (20) taktweise von Matrize (1) zu Matrize (1) verschoben wird und der Verbund (20) in der ersten Matrize (1) vorverformt und der vorverformte Verbund (20) auf die zweite Matrize (1) verschoben und in der zweiten Matrize (1) endverformt wird und die verformungswirksame Oberfläche des ersten Stempels (6) eine hohe Reibung und die des zweiten Stempels (6) eine niedrige Reibung aufweist.

11. Verfahren zur Herstellung von kaltverformten Formpackungen nach Anspruch 1, dadurch gekennzeichnet, dass ein Metall-Kunststoff-Verbund (20) des Aufbaues, enthaltend
oPA 25 / Al 45 / PVC 60 oder
oPA 25 Al 45 / oPA 25 oder
Al 120 / PP 50 oder
oPA 25 / Al 60 / PE 50 oder
oPA 25 / Al 60 / PP 60 oder
oPA 25 / Al 45 / PVC 100 oder
oPA 25 / Al 60 / PVC 60 oder
oPA 25 / Al 45 / PE-beschichtet oder
oPA 25 / Al 45 / cPA 25 oder
oPA 25 / Al 60/ PVC 100 oder
oPA 25 / Al 60 / oPA 25 / EAA 50,
wobei oPA für orientiertes Polyamid, cPA für gegossenes (cast) Polyamid, PVC für Polyvinylchlorid, PE für Polyethylen, PP für Polypropylen, EAA für Ethylenacrylsäure und Al für Aluminium steht und die Ziffern für die Schicht-, resp. Foliendicke in µm stehen, verformt wird.

12. Vorrichtung zum Herstellen von kaltverformten Formpackungen, nach einem Verfahren gemäss Anspruch 1, aus einem Metall-Kunststoff-Verbund (20), mit einem Niederhalter (5) und einer Matrize (1), die den Verbund (20) festhaltet und die Matrize (1) wenigstens eine Gesenköffnung (8) aufweist und Stempel (6), mit einer verformungswirksamen Oberfläche definierter Reibung, in die Gesenköffnungen (8) der Matrize (1), in einem oder mehreren Schritten, vorgetrieben werden und dabei der Verbund (20) zu der Formpackung mit einer oder mehreren Vertiefungen verformt wird,
dadurch gekennzeichnet, dass
die Matrizen (1) und die Niederhalter (5) einander gegenüberliegende Randbereiche (11,12) aufweisen, die den Verbund (20) klemmend und unverstreckbar zwischen dem Matrizenrand (11) und dem Niederhalterrand (12) festlegen und einem ersten Stempel (6) oder ersten Stempeln (6), mit einer verformungswirksamen Oberfläche hoher Reibung, die den Metall-Kunststoff-Verbund in einem oder mehreren Schritten bis zu 100 % der endgültigen Tiefe der Vertiefungen vorverformen und dem zweiten Stempel (6) oder Stempeln (6) mit einer verformungswirksamen Oberfläche niedriger Reibung, die den vorverformten Verbund (20) in einem oder mehreren Schritten bis zu wenigstens 100 % der endgültigen Tiefe der Vertiefungen verformen, und den Verbund (20) dabei über die Schultern (13) der Matrize (1) in Gesenköffnungen (8), die sich innerhalb eines Schulterbereiches (11) in der Matrize (1) befinden, ziehen, wobei die Oberfläche (3) des Schulterbereiches (13) gegenüber dem Randbereich (11) der Matrize (1) um 0,01 bis 10 mm tiefer liegt und der Verbund (20) über die Oberfläche (3) des Schulterbereiches (13) gleitend oder fliessend gezogen und/oder gestreckt wird.

13. Vorrichtung nach Anspruch 12, dadurch gekennzeichnet, dass die Oberfläche (3) des Schulterbereiches (13) der Matrize (1) um 0,1 bis 2,0 mm, vorzugsweise 0,15 bis 0,3 mm, tiefer liegt als die Oberfläche des Randbereiches (11) der Matrize (1).

14. Vorrichtung nach Anspruch 12, dadurch gekennzeichnet, dass die Schulterbereiche (11) der Matrize (1) ganz oder teilweise mit einer Oberflächenschicht (3) niedriger Reibung, vorzugsweise einer Reibung von 0,3 bis 2,1, bedeckt sind.

15. Vorrichtung nach Anspruch 12, dadurch gekennzeichnet, dass die verformungswirksame Oberfläche des Stempels (6) mit hoher Reibung Stahl, Polyacetal (POM), Polyethylen, Gummi, Hartgummi, Kautschuke oder Acrylpolymerisate enthält oder daraus besteht.

16. Vorrichtung nach Anspruch 12, dadurch gekennzeichnet, dass die verformungswirksame Oberfläche des Stempels (6) mit niedriger Reibung Polytetrafluorethylen, Polyoxymethylen, Polyethylen oder Polyethylenterephthalat enthält oder daraus besteht.

17. Verwendung der kaltverformten Formpackung, hergestellt gemäss Anspruch 1, als Behältnis zur vereinzelten Aufnahme von stückförmigen Füllgütern in den Vertiefungen.

## Claims

1. Process for the production of cold-formed packages from a metal/plastic composite (20), in which the composite (20) is held between a clamping device (5) and a die (1), the die (1) has at least one opening (8), punches (6) with forming surfaces with defined friction are driven into the openings (8) in the die and the composite is thus formed into the shaped package with one or more recesses, characterised in that the die (1) and the clamping device (5) have opposing edge regions (11, 12), the die (1) is provided within the edge region (11) with a shoulder region (13) which surrounds the opening (8) or openings (8), the surface of the shoulder region (13) is 0.01 to 10 mm lower than the surface of the edge region (11) of the die (1), a first punch (6) or first punches (6) with a high-friction forming surface pre-form/s the metal/plastic composite in one or more steps to 100 % of the final depth of the recesses and then the pre-formed metal/plastic composite is formed in one or more steps to at least 100 % of the final depth of the recesses by means of the second punch (6) or punches (6) with a low-friction forming surface.

2. Process for the production of cold-formed packages according to claim 1, characterised in that the first punch (6) or first punches (6) is/are driven in a first step to 90 %, expediently 70 % and advantageously 50 % of the final depth of the recesses and then, in a second step, a second punch or second punches is/are driven to 100 % to 115 % and advantageously 103 % to 110 % of the final depth of the recesses.

3. Process for the production of cold-formed packages according to claim 1, characterised in that the punch (6) with a high-friction forming surface displays higher friction between the composite (20) and the punch surface than the punch (6) with a low-friction forming surface.

4. Process for the production of cold-formed packages according to claim 1, characterised in that the composite (20) is fixed by means of a die (1) and a clamping device (5) and is formed by means of two or more punches (6) sliding telescopically one into the other and lowered one after the other into the openings (8) in a die (1).

5. Process for the production of cold-formed packages according to claim 4, characterised in that a first punch (25) of annular shape and, in particular, with a high-friction forming surface is lowered, the composite material (20) is pre-formed in the die (1), the first punch (25) is left in its pre-forming position and a second cylindrical punch (26) which slides telescopically in the first annular punch (25) and has a low-friction forming surface is then lowered and carries out the final forming of the composite material (20).

6. Process for the production of cold-formed packages according to claim 1, characterised in that the composite (20) is fixed by means of a die (1) and a clamping device (5) and the composite (20) is formed by means of two or more punches (6) which are lowered one after the other into the openings (8) in a die (1) and then raised again.

7. Process for the production of cold-formed packages according to claim 6, characterised in that the punches (6) or the punch bodies (6) display different degrees of friction on their forming surfaces, a first punch (6) with a high-friction forming surface is used, this punch (6) is retracted and then a second punch (6) with a low-friction forming surface is used, or that three or more punches (6) with forming surfaces with two different degrees of friction or with friction decreasing in a gradually stepped manner are used.

8. Process for the production of cold-formed packages according to claim 1, characterised in that a plurality of dies (1) and their associated clamping devices (5) are arranged one after the other, each of the dies (1) has an associated punch (6), the composite (20) is moved in time from die (1) to die (1), the composite (20) is pre-formed in at least one die (1), the pre-formed composite (20) is advanced to the next die (1) and final forming is carried out in the last die (1).

9. Process for the production of cold-formed packages according to claim 8, characterised in that, in the case of a plurality of successive dies (1), in the associated punches (6), the forming surface of the first punch (6) displays high friction and that of the last punch (6) displays low friction and that, in the case of a plurality of successive dies (1), in the associated punches (6), the forming surface in a first group of punches (6) displays high friction and in a second group of punches (6) displays low friction or the friction decreases gradually over the individual punches (6).

10. Process for the production of cold-formed packages according to claim 8, characterised in that two dies (1) and their associated clamping devices (5) are arranged one after the other, each of the dies (1) has an associated punch (6), the composite (20) is moved in time from die (1) to die (1), the composite (20) is pre-formed in the first die (1), the pre-formed composite (20) is advanced to the second die (1), final forming is carried out in the second die (1) and the forming surface of the first punch (6) displays high friction and that of the second punch (6) displays low friction.

11. Process for the production of cold-formed packages according to claim 1, characterised in that a metal/plastic composite (20) of the structure containing
oPA 25/Al 45/PVC 60 or
oPA 25/Al 45/OPA 25 or
Al 120/PP 50 or
oPA 25/Al 60/PE 50 or
oPA 25/Al 60/PP 60 or
oPA 25/Al 45/PVC 100 or
oPA 25/Al 60/PVC 60 or
oPA 25/Al 45/PE-coated or
oPA 25/Al 45/cPA 25 or
oPA 25/Al 60/PVC 100 or
oPA 25/Al 60/oPA 25/EAA 50
is formed, where oPA stands for oriented polyamide, cPA for cast polyamide, PVC for polyvinyl chloride, PE for polyethylene, PP for polypropylene, EAA for ethylene acrylic acid and Al for aluminium, and the numerals stand for the layer or foil thickness respectively in µm.

12. Device for the production of cold-formed packages by a process according to claim 1 from a metal/plastic composite (20), comprising a clamping device (5) and a die (1) which hold the composite (20), the die (1) having at least one opening (8), punches (6) with forming surfaces with defined friction being driven into the openings (8) in the die (1) in one or more steps and the composite (20) thus being formed into the shaped package with one or more recesses, characterised in that the dies (1) and the clamping devices (5) have opposing edge regions (11, 12) which clamp the composite (20) between the edge (11) of the die and the edge (12) of the clamping device in such a manner that it cannot be stretched, a first punch (6) or first punches (6) with a high-friction forming surface pre-form/s the metal/plastic composite in one or more steps to 100 % of the final depth of the recesses, the second punch (6) or punches (6) with a low-friction forming surface form/s the pre-formed composite (20) in one or more steps to at least 100 % of the final depth of the recesses and thus draw/s the composite (20) over the shoulders (13) of the die (1) into openings (8) situated within a shoulder region (11) in the die (1), the surface (3) of the shoulder region (13) being 0.01 to 10 mm lower than the edge region (11) of the die (1) and the composite (20) being drawn and/or stretched in a sliding or flowing manner over the surface (3) of the shoulder region (13).

13. Device according to claim 12, characterised in that the surface (3) of the shoulder region (13) of the die (1) is 0.1 to 2.0 mm, preferably 0.15 to 0.3 mm lower than the surface of the edge region (11) of the die (1).

14. Device according to claim 12, characterised in that the shoulder regions (11) of the die (1) are completely or partially covered in a surface layer (3) displaying low friction, preferably friction of 0.3 to 2.1.

15. Device according to claim 12, characterised in that the high-friction forming surface of the punch (6) contains or consists of steel, polyacetal (POM), polyethylene, vulcanised rubber, hard rubber, unvulcanised rubbers or acrylic polymers.

16. Device according to claim 12, characterised in that the low-friction forming surface of the punch (6) contains or consists of polytetrafluoroethylene, polyoxymethylene, polyethylene or polyethylene terephthalate.

17. Use of the cold-formed package produced according to claim 1 as a container for accommodating individual products in the recesses.

## Revendications

1. Procédé de fabrication d'emballages moulés à froid à partir d'un composite métal-matière plastique (20), le composite (20) étant maintenu entre un serre-flanc (5) et une matrice (1) et la matrice (1) présentant au moins une ouverture d'estampage (8) et des poinçons (6) avec une surface de déformation efficace à frottement défini étant chassés dans les ouvertures d'estampage (8) de la matrice, le composite étant alors déformé pour donner l'emballage moulé avec un ou plusieurs creux, caractérisé en ce que la matrice (1) et le serre-flanc (5) présentent des zones de bordure (11, 12) opposées et la matrice (1) présente à l'intérieur de la zone de bordure (11) une zone d'épaulement (13) qui entoure l'ouverture d'estampage (8) ou les ouvertures d'estampage (8) et la surface de la zone d'épaulement (13) est située 0,01 à 10 mm plus profondément que la surface de la zone de bordure (11) de la matrice (1) et un premier poinçon (6) ou des premiers poinçons (6) ayant une surface de déformation efficace à frottement élevé déforment préalablement au cours d'une ou plusieurs étapes le composite métal-matière plastique jusqu'à 100% de la profondeur finale des creux et le composite métal-matière plastique est ensuite déformé en une plusieurs étapes avec un deuxième poinçon (6) ou des deuxièmes poinçons (6) ayant une surface de déformation efficace à faible frottement jusqu'à au moins 100% de la profondeur finale des creux.

2. Procédé de fabrication d'emballages moulés à froid suivant la revendication 1, caractérisé en ce que le premier poinçon (6) ou les premiers poinçons (6) sont lors d'une première étape enfoncés jusqu'à 90%, utilement jusqu'à 70% et avantageusement jusqu'à 50% de la profondeur définitive des creux et un deuxième poinçon ou des deuxièmes poinçons sont ensuite enfoncés lors d'une deuxième étape jusqu'à 100% à 115% et avantageusement jusqu'à 103% à 110% de la profondeur définitive des creux.

3. Procédé de fabrication d'emballages moulés à froid suivant la revendication 1, caractérisé en ce que le poinçon (6) avec une surface de déformation efficace à frottement élevé présente un frottement plus élevé entre le composite (20) et la surface du poinçon que le poinçon (6) avec une surface de déformation efficace à faible frottement.

4. Procédé de fabrication d'emballages moulés à froid suivant la revendication 1, caractérisé en ce que, au moyen d'une matrice (1) et d'un serre-flanc (5), le composite (20) est maintenu et le composite (20) est déformé au moyen de deux ou plusieurs poinçons (6) coulissant l'un dans l'autre de manière télescopique, qui sont abaissés successivement dans les ouvertures d'estampage (8) d'une matrice (1).

5. Procédé de fabrication d'emballages moulés à froid suivant la revendication 4, caractérisé en ce qu'un premier poinçon (25) de forme annulaire et en particulier avec une surface de déformation efficace à frottement élevé, est abaissé et provoque dans la matrice (1) une déformation préalable du matériau composite (20) et le premier poinçon (25) est laissé dans sa position de déformation préalable et un deuxième poinçon de forme cylindrique (26), qui coulisse de manière télescopique dans le premier poinçon de forme annulaire (25) et présente une surface de déformation efficace à faible frottement, est ensuite abaissé et provoque la déformation finale du matériau composite (20).

6. Procédé de fabrication d'emballages moulés à froid suivant la revendication 1, caractérisé en ce que le composite (20) est maintenu au moyen d'une matrice (1) et d'un serre-flanc (5) et est déformé à l'aide de deux ou plusieurs poinçons (6) qui sont abaissés successivement dans les ouvertures d'estampage (8) d'une matrice (1) et ensuite relevés.

7. Procédé de fabrication d'emballages moulés à froid suivant la revendication 6, caractérisé en ce que le poinçon (6) ou les corps de poinçon (6) présentent un frottement différent à leurs surfaces de déformation efficaces et en ce qu'un premier poinçon (6) avec une surface de déformation efficace à frottement élevé est utilisé et ce poinçon (6) est retiré et ensuite un deuxième poinçon (6) avec une surface de déformation efficace à faible frottement est utilisé ou que trois poinçons (6) et plus avec une surface de déformation efficace à deux frottements différents ou à frottement diminuant de manière progressive sont utilisés.

8. Procédé de fabrication d'emballages moulés à froid suivant la revendication 1, caractérisé en ce que plusieurs matrices (1) avec leurs serre-flancs (5) sont disposées l'une derrière l'autre et qu'un poinçon (6) est attribué à chacune des matrices (1) et le composite (20) est déplacé de manière cyclique de matrice (1) en matrice (1) et le composite (20) est déformé de manière préalable dans au moins une matrice (1) et le composite (20) préalablement déformé est déplacé vers la matrice (1) suivante et déformé de manière définitive dans la dernière matrice (1).

9. Procédé de fabrication d'emballages moulés à froid suivant la revendication 8, caractérisé en ce que, dans le cas de plusieurs matrices (1) successives, pour les poinçons (6) correspondants, la surface de déformation efficace du premier poinçon (6) présente un frottement élevé et celle du dernier poinçon (6) présente un faible frottement et en ce que, dans le cas de plusieurs matrices (1) successives, pour les poinçons (6) correspondants, le frottement de la surface de déformation efficace dans un premier groupe de poinçons (6) présente un frottement élevé et dans un deuxième groupe de poinçons (6) un faible frottement ou que le frottement diminue graduellement d'un poinçon (6) à l'autre.

10. Procédé de fabrication d'emballages moulés à froid suivant la revendication 8, caractérisé en ce que deux matrices (1) avec leurs serre-flancs (5) sont disposées l'une derrière l'autre et qu'un poinçon (6) est attribué à chacune des matrices (1) et le composite (20) est déplacé de manière cyclique de matrice (1) en matrice (1) et le composite (20) est déformé de manière préalable dans la première matrice (1) et le composite (20) préalablement déformé est déplacé vers la deuxième matrice (1) et est déformé de manière définitive dans la deuxième matrice (1) et la surface de déformation efficace du premier poinçon (6) présente un frottement élevé et celle du deuxième poinçon (6) présente un faible frottement.

11. Procédé de fabrication d'emballages moulés à froid suivant la revendication 1, caractérisé en ce qu'un composite métal-matière plastique (20) d'une structure contenant
oPA 25 / Al45 / PVC 60 ou
oPA 25 / Al45 / / oPA 25 ou
Al 120 / PP 50 ou
oPA 25 / Al 60 / PE 50 ou
oPA 25 / Al 60 / PP 60 ou
oPA 25 / Al 45 / PVC 100 ou
oPA 25 / Al 60 / PVC 60 ou
oPA 25 / Al 45 / revêtu PE ou
oPA 25 / Al45 / cPA 25 ou
oPA 25 / Al60 / PVC 100 ou
oPA 25 / Al 60 / oPA 25 / EAA 50,
où / oPA signifie polyamide orienté, cPA polyamide coulé, PVC polychlorure de vinyle, PE polyéthylène, PP polypropylène, EAA éthylène/acide acrylique et Al aluminium et les chiffres désignent l'épaisseur de couche ou de pellicule en µm.

12. Dispositif de fabrication d'emballages moulés à froid selon un procédé suivant la revendication 1 à partir d'un composite métal-matière plastique (20), comportant un serre-flanc (5) et une matrice (1) qui maintient le composite (20), la matrice (1) présentant au moins une ouverture d'estampage (8), et des poinçons (6) avec une surface de déformation efficace à frottement défini étant chassés en une ou plusieurs étapes dans les ouvertures d'estampage (8) de la matrice, le composite (20) étant alors déformé pour donner l'emballage moulé avec un ou plusieurs creux, caractérisé en ce que les matrices (1) et les serre-flancs (5) présentent des zones de bordure (11, 12) opposées qui fixent le composite par serrage et de manière empêchant l'étirement entre le bord de la matrice (11) et le bord du serre-flanc (12), et un premier poinçon (6) ou des premiers poinçons (6) avec une surface de déformation efficace à frottement élevé déforment préalablement au cours d'une ou plusieurs étapes le composite métal-matière plastique jusqu'à 100% de la profondeur finale des creux et le deuxième poinçon (6) ou les deuxièmes poinçons (6) avec une surface de déformation efficace à faible frottement déforment au cours d'une ou plusieurs étapes le composite (20) préalablement déformé jusqu'à au moins 100% de la profondeur finale des creux, et, via les épaulements (13) de la matrice (1), emboutissent ce faisant le composite (20) dans des ouvertures d'estampage (8) qui se trouvent dans une zone d'épaulement (11) dans la matrice (1), la surface (3) de la zone d'épaulement (13) étant située de 0,01 à 10 mm plus profondément que la zone de bordure (11) de la matrice (1) et le composite (20) étant tiré et/ou étiré avec glissement ou fluage sur la surface (3) de la zone d'épaulement (13).

13. Dispositif suivant la revendication 12, caractérisé en ce que la surface de la zone d'épaulement (13) de la matrice (1) est située de 0,1 à 2,0 mm, de préférence de 0,15 à 0,3 mm plus profondément que la surface de la zone de bordure (11) de la matrice (1).

14. Dispositif suivant la revendication 12, caractérisé en ce que les zones d'épaulement (11) de la matrice (1) sont entièrement ou partiellement recouvertes d'une couche de surface (3) à faible frottement, de préférence d'un frottement de 0,3 à 2,1.

15. Dispositif suivant la revendication 12, caractérisé en ce que la surface de déformation efficace du poinçon (6) à frottement élevé contient de l'acier, du polyacétal (POM), du polyéthylène, du caoutchouc, de l'ébonite, des caoutchoucs ou des polymérisats acryliques ou est constituée de ces substances.

16. Dispositif suivant la revendication 12, caractérisé en ce que la surface de déformation efficace du poinçon (6) à faible frottement contient du polytétrafluoroéthylène, du polyoxyméthylène, du polyéthylène ou du polyéthylènetéréphtalate ou est constituée de ces substances.

17. Utilisation de l'emballage moulé à froid fabriqué suivant la revendication 1 comme récipient pour l'emballage individuel de marchandises à la pièce dans les creux.
